# DEMANDE DE BREVET EUROPEEN

(11) **EP 1 864 873 A1**
(43) Date de publication de la demande: **12.12.2007**
(21) Numéro de dépôt: 07109562.4
(22) Date de dépôt: 04.06.2007
(51) Int. Cl.: B60S 1/40

(54) **Dispositif de couplage pour balai d'essuie-glace plat**

(30) Priorité: 08.06.2006 FR 0605106
(71) Demandeur: VALEO SYSTEMES D'ESSUYAGE, 78321 La Verrière (FR)
(72) Inventeur: Gayton, Nicolas VALEO SYSTEMES D'ESSUYAGE, 63500 Issoire (FR)
(74) Mandataire: Rosolen-Delarue, Katell

(57) **Abrégé**

La présente invention concerne un dispositif de couplage (1) destiné à raccorder un balai d'essuie-glace plat (100) à un bras porte-balai (200,201), ledit dispositif de couplage (1) comprenant des moyens de liaison (10) permettant de le relier de manière pivotante au balai (100), ainsi que des moyens de fixation (20) permettant de le solidariser de façon amovible au bras (200,201).

L'invention est caractérisée en ce que les moyens de fixation (20) comportent, d'une part, un logement traversant (30) qui est doté de deux ouvertures (31,32) sensiblement opposées et qui est apte à recevoir la portion distale (210,211) du bras (200,201) dont l'insertion est à même de s'effectuer indifféremment par l'une ou l'autre desdites ouvertures (31,32), et d'autre part, des moyens de verrouillage (40) aptes à bloquer longitudinalement la portion distale (210,211) du bras (200,201) à l'intérieur du logement traversant (30).

## Description

La présente invention concerne un dispositif de couplage permettant de raccorder un balai d'essuie-glace plat à l'extrémité d'un bras porte-balai.

L'invention trouve une application particulièrement avantageuse, mais non exclusive, dans le domaine des systèmes d'essuyage pour véhicules automobiles.

Contrairement aux balais droits majoritairement employés jusqu'à aujourd'hui, un balai plat présente la particularité d'être dépourvu de structure à palonniers. Cette nouvelle catégorie de balai d'essuie-glace dispose toujours d'une lame racleuse souple, mais l'armature externe chargée de la supporter est ici remplacée par une ossature flexible qui est directement intégrée à ladite lame.

De par cette structure si particulière qui confère à l'ensemble une hauteur relativement faible, une pièce intermédiaire s'avère généralement nécessaire pour pouvoir monter un balai d'essuie-glace plat à l'extrémité libre d'un bras porte-balai. Une telle pièce consiste habituellement en un dispositif de couplage qui est en mesure à la fois d'être relié de manière pivotante au balai, et d'être solidarisé de façon amovible au bras.

Malheureusement, et toujours en raison de la structure singulière des balais d'essuie-glace plats, il n'est pas possible de mettre en oeuvre les principes d'assemblage connus de l'état de la technique, c'est-à-dire d'utiliser les dispositifs de couplage communément employés pour le raccordement de nombreux balais d'essuie-glace droits.

C'est ainsi que des solutions spécifiques ont dues être développées spécialement pour les balais d'essuie-glace plats. On connaît notamment de la demande de brevet internationale WO2004/024520, un dispositif de couplage qui est à même d'être solidarisé à un bras porte-balai, par insertion de la portion distale du bras dans un logement ménagé longitudinalement dans le dispositif de couplage, ladite insertion s'opérant via une ouverture unique ménagée à l'une des extrémités du logement. Des moyens de blocage sont par ailleurs prévus pour immobiliser longitudinalement le bras à l'intérieur du logement.

Quoi qu'il en soit, une autre caractéristique singulière des balais d'essuyage plats réside dans le fait qu'ils sont généralement dotés d'un déflecteur aérodynamique faisant partie intégrante de la lame, ce qui confère à leurs sections des profils totalement dissymétriques et donc une position de fonctionnement unique.

Cela signifie qu'une fois qu'un tel balai plat est relié de manière pivotante à un dispositif de couplage tel que précédemment décrit, l'ensemble alors formé n'est en aucun cas en mesure d'être utilisé indifféremment sur un véhicule à direction à gauche ou sur un véhicule à direction à droite. La présence du déflecteur aérodynamique interdit en effet que l'ensemble puisse être simplement retourné pour pouvoir passer d'un type de véhicule à l'autre.

Sachant par ailleurs que la liaison pivotante entre le balai plat et le dispositif de couplage est habituellement indémontable pour des raisons de fiabilité, il n'est pas non plus possible pour un utilisateur d'inverser la position dudit balai par rapport audit dispositif de couplage en vue de passer d'un montage pour direction à gauche à un montage pour direction à droite ou inversement.

L'ensemble formé par l'association d'un balai d'essuie-glace plat et de son dispositif de couplage présente par conséquent l'inconvénient d'être d'un usage limité, puisque qu'il n'est compatible qu'avec un seul type de véhicule automobile, c'est-à-dire soit un véhicule à direction à gauche, soit un véhicule à direction à droite.

Il en résulte que pour un même balai plat, qui rappelons le est systématiquement fourni assemblé à son dispositif de couplage, deux références distincts devront être disponibles, l'une dédiée au direction à gauche et l'autre réservée au direction à droite. Cela implique donc une multiplication excessive du nombre de références, et au final un surcoût significatif que ce soit au niveau de la fabrication ou de la gestion des stocks.

Aussi, le problème technique à résoudre par l'objet de la présente invention, est de proposer un dispositif de couplage destiné à raccorder un balai d'essuie-glace plat à un bras porte-balai, ledit dispositif de couplage comprenant des moyens de liaison permettant de le relier de manière pivotante au balai, ainsi que des moyens de fixation permettant de le solidariser de façon amovible au bras, dispositif de couplage qui permettrait d'éviter les problèmes de l'état de la technique en offrant notamment une polyvalence d'utilisation sensiblement accrue.

La solution au problème technique posé consiste, selon la présente invention, en ce que les moyens de fixation comportent, d'une part, un logement traversant qui est doté de deux ouvertures sensiblement opposées et qui est apte à recevoir la portion distale du bras dont l'insertion est à même de s'effectuer indifféremment par l'une ou l'autre desdites ouvertures, et d'autre part, des moyens de verrouillage aptes à bloquer longitudinalement la portion distale du bras à l'intérieur du logement traversant.

L'invention telle qu'ainsi définie présente l'avantage d'être utilisable indifféremment sur un véhicule à direction à gauche ou sur un véhicule à direction à droite. Un tel dispositif de couplage dispose en effet de deux ouvertures d'insertion qui le rendent compatible avec les bras porte-balai des deux types de véhicules, pourtant orientées de manière sensiblement opposée.

Le dispositif de couplage objet de l'invention, même une fois associé à un balai d'essuie-glace plat, s'avère par conséquent parfaitement polyvalent. D'un point de vue économique, cette caractéristique s'avère particulièrement intéressante aussi bien pour le marché de la première monte que dans le domaine de la rechange.

La présente invention concerne également les caractéristiques qui ressortiront au cours de la description qui va suivre, et qui devront être considérées isolément ou selon toutes leurs combinaisons techniques possibles.

Cette description, donnée à titre d'exemple non limitatif, est destinée à mieux faire comprendre en quoi consiste l'invention et comment elle peut être réalisée. Elle est par ailleurs donnée en référence aux dessins annexés dans lesquels:
La figure 1 est une vue en perspective qui illustre les possibilités de montage sur deux types différents de bras porte-balai, d'un balai d'essuie-glace plat qui est doté d'un dispositif de couplage conforme à l'invention.
La figure 2 montre en coupe longitudinale le dispositif de couplage de la figure 1, une fois solidarisé à un des bras porte-balai.
La figure 3 fait apparaître en perspective le dispositif de couplage des figures 1 et 2.
La figure 4 constitue une vue de dessus du dispositif de couplage visible aux figures 1 à 3.

Pour des raisons de clarté, les mêmes éléments ont été désignés par des références identiques. De même, seuls les éléments essentiels pour la compréhension de l'invention ont été représentés, et ceci sans respect de l'échelle et de manière schématique.

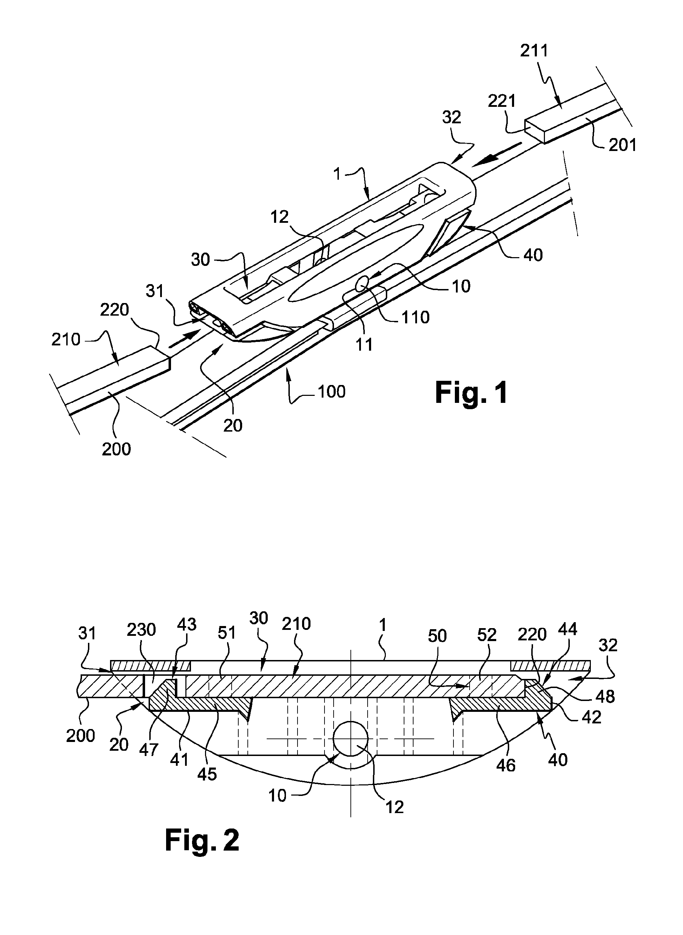

La figure 1 montre un balai d'essuie-glace plat 100 qui est en mesure d'être monté, soit à l'extrémité libre d'un bras porte-balai 200 de véhicule à direction à gauche, soit à celle d'un bras porte-balai 201 de véhicule à direction à droite.

A cet effet, le balai d'essuie-glace plat 100 est relié de manière pivotante à un dispositif de couplage par l'intermédiaire de moyens de liaison 10 qui seront décrits davantage plus loin ; ledit dispositif de couplage 1 comportant par ailleurs des moyens de fixation 20 à même de le solidariser de façon amovible à l'un quelconque des deux bras porte-balai 200, 201.

Conformément à l'objet de la présente invention, les moyens de fixation 20 comprennent tout d'abord un logement traversant 30 qui est doté de deux ouvertures 31, 32 sensiblement opposées. L'ensemble est agencé de manière à ce que le logement 30 soit en mesure de recevoir la portion distale 210, 211 du bras 200, 201, mais aussi de façon à ce que les ouvertures 31, 32 permettent l'insertion du bras en question 200, 201 indifféremment par une extrémité ou l'autre dudit logement traversant 30. Mais les moyens de fixation 20 disposent également de moyens de verrouillage qui sont en mesure de bloquer longitudinalement la portion distale 210, 211 du bras 200, 201 à l'intérieur du logement traversant 30.

Dans ce mode particulier de réalisation, choisi uniquement à titre d'exemple, les moyens de liaison 10 se composent de deux trous traversants 11, 12 qui sont ménagés en vis-à-vis et qui sont en mesure de supporter les extrémités d'un axe de pivotement 110 monté transversalement sur le balai d'essuie-glace 100. Bien entendu, tout autre agencement connu permettant de réaliser une liaison pivotante pourrait être utilisé de manière équivalente.

Ainsi qu'on peut le voir plus précisément à la figure 2, le logement traversant 30 est ménagé de manière sensiblement parallèle au corps du balai d'essuie-glace plat 100.

On note également que de manière particulièrement avantageuse, le logement traversant 30 s'étend de manière sensiblement linéaire.

Conformément à une autre caractéristique avantageuse, au moins une partie du logement traversant 30 présente une section sensiblement complémentaire de celle de la portion correspondante du bras porte-balai 200. Cette particularité permet de garantir le maintien transversal de la portion distale 210, 211 du bras 200, 201 à l'intérieur du logement 30.

De préférence, les deux ouvertures 31, 32 sont ménagées de manière sensiblement symétrique l'une par rapport à l'autre. Cette symétrie vaut aussi bien en terme de positionnement relatif que de dimensions.

Selon une particularité de l'invention, les moyens de verrouillage 40 comportent deux éléments de blocage 41, 42 élastiquement déformables, qui sont ménagés à proximité respectivement de chaque ouverture 31, 32, et qui sont dotés chacun d'une partie 43, 44 faisant saillie à l'intérieur du logement traversant 30.

L'ensemble est tout d'abord conformé de manière à ce que chaque élément de blocage 41, 42 soit en mesure de se déformer élastiquement entre une position active et une position passive dans lesquelles sa partie saillante 43, 44 s'étend respectivement à l'intérieur et à l'extérieur du logement traversant 30.

Mais cet ensemble est par ailleurs agencé de manière à ce que chaque partie saillante soit à même, d'une part, à former une butée longitudinale vis-à-vis de l'extrémité 220, 221 du bras porte-balai 200, 201, lorsque ce dernier est inséré dans le logement traversant 30 par l'ouverture 31, 32 la plus distante de ladite partie saillante 43, 44, et d'autre part, à coopérer par emboîtement avec un trou d'ancrage 230 ménagé le long de la portion distale 210, 211 du bras 200, 201, lorsque ce dernier est inséré dans le logement 30 par l'ouverture 31, 32 la plus proche de ladite partie saillante 43, 44.

Les éléments de verrouillage 40 sont ainsi pleinement en mesure de bloquer la mobilité longitudinale du bras porte-balai 200, 201 lorsque ce dernier est inséré dans le logement 30, et ce quel que soit le sens d'insertion dudit bras 200, 201.

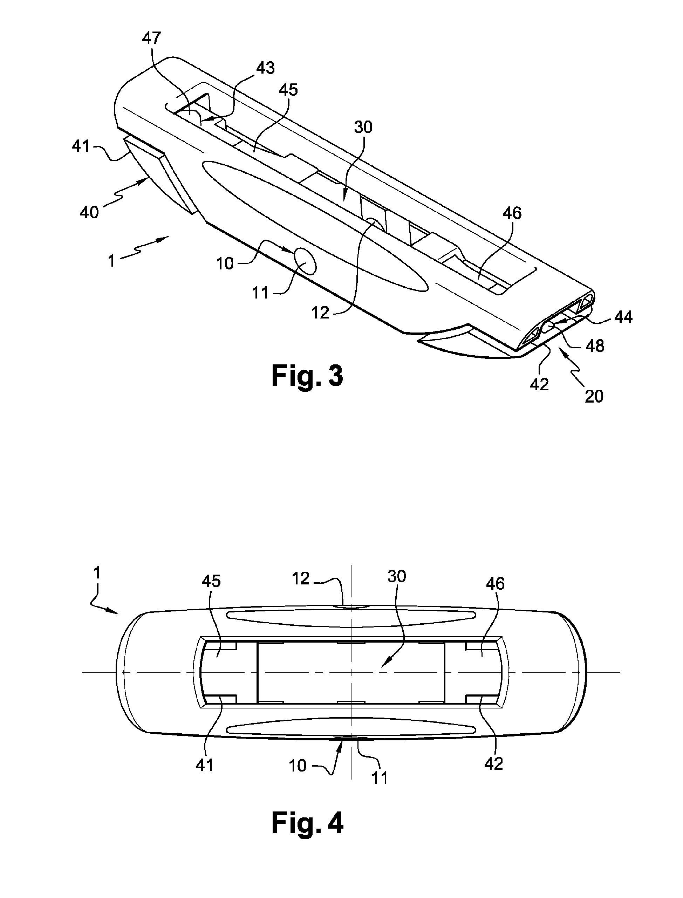

Dans l'exemple de réalisation présenté et notamment aux figures 1 à 4, chaque élément de blocage 41, 42 est concrètement constitué par une languette flexible 45, 46 qui s'étend de manière sensiblement parallèle à la direction d'insertion du bras porte-balai 200, 201 dans le logement 30, et qui comporte à son extrémité un ergot 47, 48 formant partie saillante 43, 44.

De manière particulièrement avantageuse, les deux éléments de blocage 41, 42 sont ménagés de manière sensiblement symétrique. Cela concerne aussi bien la forme et la disposition relative des languettes flexibles 45, 46, que la forme et la disposition relative des ergots 47, 48. Le but est de pouvoir disposer au final d'un dispositif de couplage 1 lui aussi complètement symétrique, afin de renforcer visuellement son caractère polyvalent.

Selon une autre particularité de l'invention, le dispositif de couplage 1 est en outre pourvu de moyens de maintien 50 qui sont en mesure de guider l'insertion de la portion distale 210, 211 du bras porte-balai 200, 201 à l'intérieur du logement traversant 30, et à la maintenir transversalement une fois complètement insérée.

Dans cet exemple de réalisation, les moyens de maintien 50 se composent de deux paires de godrons 51, 52 qui sont ménagées à proximité respectivement de chaque ouverture 31, 32, les godrons 51, 52 d'une même paire étant positionnés sensiblement en regard l'un de l'autre au niveau des parois internes du dispositif de couplage 1, qui délimitent latéralement le logement traversant 30.

Bien entendu, l'invention concerne également tout balai d'essuie-glace plat doté d'un dispositif de couplage tel que précédemment décrit.

Mais plus généralement encore, l'invention est en outre relative à tout système d'essuyage pourvu d'au moins un tel balai d'essuie-glace.

## Revendications

1. Dispositif de couplage (1) destiné à raccorder un balai d'essuie-glace plat (100) à un bras porte-balai (200, 201), ledit dispositif de couplage (1) comprenant des moyens de liaison (10) permettant de le relier de manière pivotante au balai (100), ainsi que des moyens de fixation (20) permettant de le solidariser de façon amovible au bras (200, 201), **caractérisé en ce que** les moyens de fixation (20) comportent, d'une part, un logement traversant (30) qui est doté de deux ouvertures (31, 32) sensiblement opposées et qui est apte à recevoir la portion distale (210, 211) du bras (200, 201) dont l'insertion est à même de s'effectuer indifféremment par l'une ou l'autre desdites ouvertures (31, 32), et d'autre part, des moyens de verrouillage (40) aptes à bloquer longitudinalement la portion distale (210, 211) du bras (200, 201) à l'intérieur du logement traversant (30).

2. Dispositif de couplage (1) selon la revendication 1, **caractérisé en ce que** le logement traversant (30) est ménagé de manière sensiblement parallèle au corps du balai d'essuie-glace plat (100).

3. Dispositif de couplage (1) selon l'une des revendications 1 ou 2, **caractérisé en ce que** le logement traversant (30) s'étend de manière sensiblement linéaire.

4. Dispositif de couplage (1) selon l'une quelconque des revendications 1 à 3, **caractérisé en ce qu'**au moins une partie du logement traversant (30) présente une section sensiblement complémentaire de celle de la portion correspondante du bras porte-balai (200, 201).

5. Dispositif de couplage (1) selon l'une quelconque des revendications 1 à 4, **caractérisé en ce que** les deux ouvertures (31, 32) sont ménagées de manière sensiblement symétrique l'une par rapport à l'autre.

6. Dispositif de couplage (1) selon l'une quelconque des revendications 1 à 5, **caractérisé en ce que** les moyens de verrouillage (40) comportent deux éléments de blocage (41, 42) élastiquement déformables, qui sont ménagés à proximité respectivement de chaque ouverture (31, 32), et qui sont dotés chacun d'une partie (43, 44) faisant saillie à l'intérieur du logement traversant (30).

7. Dispositif de couplage (1) selon la revendication 6, **caractérisé en ce que** chaque élément de blocage (41, 42) est apte à se déformer élastiquement entre une position active et une position passive dans lesquelles sa partie saillante (43, 44) s'étend respectivement à l'intérieur et à l'extérieur du logement traversant (30).

8. Dispositif de couplage (1) selon l'une des revendications 6 ou 7, **caractérisé en ce que** chaque partie saillante (43, 44) est apte, d'une part, à former une butée longitudinale vis-à-vis de l'extrémité (220, 221) du bras porte-balai (200, 201) lorsque ledit bras (200, 201) est inséré dans le logement traversant (30) par l'ouverture (31, 32) la plus distante de ladite partie saillante (43, 44), et d'autre part, à coopérer par emboîtement avec un trou d'ancrage (230) ménagé le long de la portion distale (210, 211) du bras (200, 201) lorsque ledit bras (200, 201) est inséré dans le logement (30) par l'ouverture (31, 32) la plus proche de ladite partie saillante (43, 44).

9. Dispositif de couplage (1) selon l'une quelconque des revendications 1 à 8, **caractérisé en ce que** chaque élément de blocage (41, 42) est constitué par une languette flexible (45, 46) qui s'étend de manière sensiblement parallèle à la direction d'insertion du bras porte-balai (200, 201) dans le logement (30), et qui comporte à son extrémité un ergot (47, 48) formant partie saillante (43, 44).

10. Dispositif de couplage (1) selon l'une quelconque des revendications 1 à 9, **caractérisé en ce que** les deux éléments de blocage (41, 42) sont ménagés de manière sensiblement symétrique.

11. Dispositif de couplage (1) selon l'une quelconque des revendications 1 à 10, **caractérisé en ce que** les moyens de liaison (10) comportent deux trous (11, 12) qui sont ménagés en vis-à-vis et qui sont aptes à supporter les extrémités d'un axe de pivotement (110) monté transversalement sur le balai d'essuie-glace (100).

12. Dispositif de couplage (1) selon l'une quelconque des revendications 1 à 11, **caractérisé en ce qu'**il comporte en outre des moyens de maintien (50) aptes à guider l'insertion de la portion distale (210, 211) du bras porte-balai (200, 201) à l'intérieur du logement traversant (30), et à la maintenir transversalement une fois complètement insérée.

13. Dispositif de couplage (1) selon la revendication 12, **caractérisé en ce que** les moyens de maintien (50) comportent deux paires de godrons (51, 52) respectivement ménagées à proximité de chaque ouverture (31, 32), les godrons (51, 52) d'une même paire étant positionnés sensiblement en regard l'un de l'autre au niveau des parois internes du dispositif de couplage 1, qui délimitent latéralement le logement traversant (30).

14. Balai d'essuie-glace plat (100), **caractérisé en ce qu'**il comporte un dispositif de couplage (1) selon l'une quelconque des revendications précédentes.

15. Système d'essuyage, **caractérisé en ce qu'**il comporte au moins un balai d'essuie-glace plat (100) selon la revendication précédente.
